# EUROPEAN PATENT SPECIFICATION

(11) **EP 1 921 098 B1**
(45) Date of publication and mention of the grant of the patent: **08.08.2012**
(21) Application number: 06782706.3
(22) Date of filing: 11.08.2006
(51) Int. Cl.: C08G 18/42, C08G 18/63, C08G 18/76, C08G 18/48

(54) **COMPOSITION FOR POLYURETHANE FOAM, POLYURETHANE FOAM OBTAINED FROM THE COMPOSITION, AND USE THEREOF**
ZUSAMMENSETZUNG FÜR POLYURETHANSCHAUMSTOFF, DARAUS ERHALTENER POLYURETHANSCHAUMSTOFF UND VERWENDUNG DAVON
COMPOSITION POUR MOUSSE DE POLYURÉTHANE, MOUSSE DE POLYURÉTHANE OBTENUE À PARTIR DE CELLE-CI ET SON UTILISATION

(30) Priority: 12.08.2005 JP 2005234527
(43) Date of publication of application: 14.05.2008
(73) Proprietor: Mitsui Chemicals, Inc., Tokyo (JP)
(72) Inventor: NOZAWA, Katsuhisa, Sodegaura-shi, Chiba, 2990265 (JP); SASAKI, Masahiro, Sodegaura-shi, Chiba, 299-0265 (JP); OHKUBO, Kazuhiko, Sodegaura-shi, Chiba, 2990265 (JP)
(74) Representative: Benson, John Everett
(86) International application number: PCT/JP2006/315967
(87) International publication number: WO 2007/020904

(56) References cited:
- WO-A1-2004/020497
- JP-A- 2001 064 347
- JP-A- 2002 265 555
- JP-A- 2005 097 583
- JP-A- 2005 206 780
- JP-A- 2005 320 431
- JP-A- 2006 002 145
- JP-A- 2006 104 404
- US-A1- 2005 070 620
- US-B1- 6 201 035

## Description

### [TECHNICAL FIELD]

The present invention relates to a polyurethane foam composition containing a plant-derived polyol, a polyurethane foam obtained from the composition and the use thereof. More particularly, the present invention directs to a plant-derived polyurethane foam composition capable of providing a polyurethane foam that attains hardness and ball rebound suitable for a cushioning material used for a seat cushion for vehicles and the like and excellent durability in a balanced manner, a plant-derived polyol suitable for the composition, a plant-derived polyurethane foam obtained from the composition and the use thereof.

### [BACKGROUND ART]

From the viewpoint of reducing environmental burdens in recent years, plant-derived resins obtained from plant resources have been demanded instead of petroleum-derived resins produced using petroleum resources as raw materials. That is, since plant-derived resins are made from raw materials obtained from plants, which absorb carbon dioxide in the air to grow by photosynthesis, no net increase of atmospheric carbon dioxide results even if carbon dioxide is emitted into the atmosphere on incineration of the used resin, namely such resins correspond to so-called carbon-neutral materials. Therefore, plant-derived resins draw attention as materials contributing to reducing environmental burdens.

Meanwhile, a flexible polyurethane foam, which is one of resin articles, is widely used for a seat cushion for vehicles such as automobiles and in other applications owing to the excellent cushioning property. The seat cushion is required to provide a comfortable cushioning feeling to sit on, that is, an appropriate hardness and ball rebound so as to neither too hard nor too soft. Further, it is also required to have excellent durability such that small changes are merely caused in elasticity, hardness and thickness of the seat cushion even after long-term use.

As polyol components used as raw materials of polyurethane foams, there have been known so far a polyether polyol and a polyester polyol derived from petroleum as representative examples, and further it has also been known to use castor oil, which is derived from a plant, and a castor oil-based polyol, which is a castor oil derivative. For example, Patent Document 1 discloses that castor oil is reacted with an aromatic diisocyanate to form a prepolymer and then the prepolymer is reacted with water to form a polyurethane foam. Patent Document 2 discloses a method for producing polyurethane foams by using a castor oil derivative such as hydrogenated castor oil as an additive. Meanwhile, Patent Document 3 discloses the use of an ester group-containing condensate having an average molecular weight of 900 to 4500 produced from ricinoleic acid, which is a main component of a castor oil fatty acid, and a monohydric or polyhydric alcohol, as an internal release agent in producing a flexible polyurethane molded article which may be fine porous. Patent Document 4 discloses the use of a polyester polyol comprising a carboxylic acid unit (A) and a polyhydric alcohol unit (B), wherein the carboxylic acid unit (A) at least partially contains a unit (a) of an oxycarboxylic acid oligomer in which a hydroxy-containing carboxylic acid such as a castor oil fatty acid is condensed to form a dimer or a higher oligomer, as a component of a urethane-based paint composition.

However, the polyurethane foam described in Patent Document 1 is a hard polyurethane foam, and this method cannot provide a polyurethane foam having appropriate hardness and ball rebound, particularly a flexible polyurethane foam having suitable properties for a cushioning material used for a seat cushion for vehicles. Further, in the process described in Patent Document 2, the castor oil-based polyol is used as an additive and the amount added is 0.1 to 15% by weight with respect to a polyhydroxy compound. Particularly, in Examples, the content of the castor oil-based polyol is only 5% of the whole polyol component, and the document describes effects only for curability and a low compression set, while there is no description for the effect that the polyurethane foam in which a resin structure is formed from the castor oil-based polyol exhibits appropriate hardness, ball rebound and durability in a balanced manner. Moreover, in Patent Documents 3 and 4, a castor oil-based polyol having a higher molecular weight is used compared to that used in Patent Documents 1 and 2. However, in Patent Document 3, the castor oil-based polyol is used only as an internal release agent, and, Patent Document 4 discloses only a paint composition. Any proceses described in these Patent Documents cannot provide a plant-derived polyurethane foam having properties demanded in market as described above. Thus, there has not been known a plant-derived polyurethane foam that is produced by using a plant-derived polyol as the polyol component and attains appropriate hardness and ball rebound and excellent durability in a balanced manner.
[Patent Document 1] US Patent No. 2787601
[Patent Document 2] Japanese Patent Laid-open Publication No. H5-59144
[Patent Document 3] Japanese Patent Laid-open Publication No. S61-91216
[Patent Document 4] Japanese Patent Laid-open Publication No. H11-166155
WO 2004/020497 Al describes a method for the production of low-emission polyurethane soft foams with reduced odour and reduced fogging by reaction of a) polyisocyanates with b) compounds with at least two hydrogen atoms reactive to isocyanate groups and c) blowing agents.
US 2005/0070620 A1 describes a flexible polyurethane foam prepared by reacting, in the presence of a blowing agent, a polyisocyanate with an active hydrogen-containing composition that includes a modified vegetable oil-based polyol.
US 6,201,035 B1 describes a method for the formation of a polyurethane foam comprising the steps of: forming a polyol blend having a nominal functionality of at least 2.3 by combining at least one polyether polyol having a plurality of terminal ethylene oxide caps of from 5 to 25% by weight based on the total weight of the polyether polyol, a molecular weight of greater than or equal to 4000 Daltons, and an unsaturation of greater than 0.04 meq/g KOH, at least one graft polyether polyol having an equivalent weight of greater than 1000 Daltons, a solid content of at least 28%, and a plurality of terminal ethylene oxide caps of from 5 to 25% by weight based on the total weight of the graft polyether polyol; and at least one very low unsaturated polyether polyol having an unsaturation of less than or equal to 0.018 meq/g KOH and a plurality of terminal ethylene oxide caps of from 5 to 25% by weight based on the total weight of the polyether polyol; providing at least one polyisocyanate component, a catalyst and water as a blowing agent at a level of between 3 to 7% by weight; and combining the polyol blend with the polyisocyanate component, the catalyst and the water to form a polyurethane foam.

The object of the present invention is to provide a plant-derived composition for obtaining a polyurethane foam that contributes to reducing environmental burdens and attains suitable hardness and ball rebound for a cushioning material used for a seat cushion for vehicles and the like and excellent durability in a balanced manner; and a plant-derived polyurethane foam having such properties.

As a result of earnest studies to solve the above problems, the present inventors have found that there can be obtained a plant-derived polyurethane foam that contributes to reducing environmental burdens and attains appropriate hardness and ball rebound and excellent durability in a balanced manner by producing the polyurethane foam using a plant-derived polyol and a low-monol polyol in combination, and they have completed the present invention.

The polyurethane foam composition of the present invention comprises at least water, a catalyst, a surfactant, a polyisocyanate, and a polyol and/or a polymer-dispersed polyol (a polymer polyol) in which polymer fine particles obtained by polymerizing a compound having an unsaturated bond are dispersed in a polyol, wherein the polyol comprises at least:
(A) a plant-derived polyol produced by using a raw material obtained from plants, and
(Bl) a low-monol polyol having an overall degree of unsaturation of 0.050 meq/g or less and a hydroxyl value of 10 to 40 mg KOH/g,
wherein the total amount of the plant-derived polyol (A) and a polymer polyol obtained from the polyol (A) is 15 to 95% by mass with respect to 100% by mass of all the polyol components, and
wherein the total amount of the polyether polyol (Bl) and a polymer polyol (PB) obtained from the polyether polyol (Bl) is 5 to 85% by mass with respect to 100% by mass of all the polyol components, and
wherein the plant-derived polyol (A) is one or more kinds of plant-derived polyols selected from:
a plant-derived polyester polyol (A5) having at least a structure in which 6 to 30 mol of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in said castor oil fatty acid,
a polyol (A6) given by further adding propylene oxide and/or ethylene oxide to said plant-derived polyester polyol (A5),
a polyol (A7) given by further adding a lactone to said plant-derived polyester polyol (A5), and
a polyol (A8) given by further adding a hydroxycarboxylic acid having a primary hydroxyl group to said plant-derived polyester polyol (A5).
The plant-derived polyester polyol (A5) is more preferred.

The polyether polyol (Bl) is preferably obtained by polymerizing an alkylene oxide (s) containing ethylene oxide with an active hydrogen-containing compound having 2 to 8 of functional groups, the polyether polyol having a hydroxyl value of 10 to 40 mgKOH/g and a ratio of the constitution units derived from ethylene oxide of 5 to 30% by weight with respect to 100% by weight of all the constitution units derived from the alkylene oxide(s).

The present invention also relates to a polyol and/or a polymer-dispersed polyol (a polymer polyol) in which polymer fine particles obtained by polymerizing a compound having an unsaturated bond are dispersed in a polyol,
wherein the polyol comprises at least:
(A) a plant-derived polyol produced by using a raw material obtained from plants and
(B1) a polyether polyol having an overall degree of unsaturation of 0.050 meq/g or less and a hydroxyl value of 10 to 40 mgKOH/g, wherein the total amount of the plant-derived polyol (A) and a polymer polyol obtained from the polyol (A) is 15 to 95% by mass with respect to 100% by mass of all the polyol components, wherein the total amount of the polyether polyol (B1) and a polymer polyol (PB) obtained from the polyether polyol (B1) is 5 to 85% by mass with respect to 100% by mass of all the polyol components, and
wherein the plant-derived polyol (A) is one or more kinds of plant-derived polyols selected from:
a plant-derived polyester polyol (A5) having at least a structure in which 6 to 30 mol of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in said castor oil fatty acid,
a polyol (A6) given by further adding propylene oxide and/or ethylene oxide to said plant-derived polyester polyol (A5),
a polyol (A7) given by further adding a lactone to said plant-derived polyester polyol (A5), and
a polyol (A8) given by further adding a hydroxycarboxylic acid having a primary hydroxyl group to said plant-derived polyester polyol (A5).

The polyurethane foam of the present invention is obtainable by foaming the above polyurethane foam composition. The process for producing polyurethane foams of the present invention comprises foaming the above polyurethane foam composition.

The seat pad for vehicles of the present invention comprises the above polyurethane foam and preferably a seat pad for a seat cushion or a seat back.
The present invention also provides use of a polyurethane foam of the invention as a seat pad for a vehicle, wherein the seat pad is preferably a seat cushion or a seat back.

### [EFFECTS OF THE INVENTION]

According to the present invention, there can be provided a plant-derived composition capable of providing a polyurethane foam that attains appropriate hardness and ball rebound and excellent durability in a balanced manner, and a plant-derived polyurethane foam having such properties.

Furthermore, the composition and the polyurethane foam of the present invention, because it is derived from plants, can contribute to reducing environmental burdens, which is oriented to the recent social trend toward global environmental conservation.

### [Polyurethane foam composition]

The polyurethane foam composition of the present invention comprises a polyol and/or a polymer-dispersed polyol obtained from a polyol, water, a catalyst, a surfactant, a polyisocyanate and, if necessary, other auxiliaries. The polyol comprises a plant-derived polyol (A) and a polyether polyol (Bl) (hereinafter these are together referred to as "specific polyols") and optionally contains another polyol.

### <Specific polyols>

### (A) Plant-derived polyol

The plant-derived polyol (A) used in the present invention is a polyol produced by using a raw material obtained from plants and exemplified by castor oil and its derivative. Further, a soybean oil derivative is also included. These plant-derived polyols may be used alone or in combination of two or more.

### (Plant-derived polyester polyol (A5))

A polyester polyol having at least a structure in which 6 to 30 mol, preferably 6 to 28 mol, of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in the castor oil fatty acid.

### (Plant-derived polyester polyol (A6))

A polyol given by further adding propylene oxide and/or ethylene oxide to the plant-derived polyester polyol (A5).

### (Plant-derived polyester polyol (A7))

A polyol given by further adding a lactone to the plant-derived polyester polyol (A5).

### (Plant-derived polyester polyol (A8))

A polyol given by further adding a hydroxycarboxylic acid having a primary hydroxyl group to the plant-derived polyester polyol (A5).

These plant-derived polyester polyols may be used alone or in combination of two or more.

A polyurethane foam having appropriate ball rebound, elongation percentage and hardness suitable for a cushioning material can be formed by using a plant-derived polyester polyol having the above range of condensation ratio of a hydroxycarboxylic acid having 15 or more carbon atoms to a polyhydric alcohol. The "polyol having a structure in which, for example, 3 to 30 mol of the hydroxycarboxylic acid are condensed with 1 mol of a polyhydric alcohol" includes also a polyol obtained by condensing 3 to 30 mol of the hydroxycarboxylic acid with 1 mol of the polyhydric alcohol (for a mixture of two or more polyhydric alcohols, as the total).

There may also be used a polyol in which a hydroxycarboxylic acid having 15 or more carbon atoms is condensed with a fat/oil having a hydroxyl group such as castor oil so as to have a structure in which 3 to 30 mol of the hydroxycarboxylic acid are condensed with 1 mol of a polyhydric alcohol.

As the polyhydric alcohol, there may be mentioned a diol having 2 to 10 carbon atoms such as ethylene glycol, propylene glycol, diethylene glycol, dipropylene glycol, 1,3-propanediol, 1,3-butanediol, 1,4-butanediol, 1,6-hexanediol and 1,4-cyclohexanediol; a triol having 2 to 10 carbon atoms such as trimethylolpropane and glycerin; a tetraol such as diglycerin and pentaerythritol; a hexaol such as dipentaerythritol; sugars such as glucose, sorbitol, dextorose, fructose and sucrose, and derivatives thereof; and phenols having two or more hydroxyl groups such as bisphenol A. Moreover, there may be also used an alkylene oxide adduct of a polyhydric alcohol in which ethylene oxide, propylene oxide or the like is added to the polyhydric alcohol. These polyhydric alcohols may be used alone or as a mixture of two or more.

As the hydroxycarboxylic acid having 15 or more carbon atoms, there may be preferably used a saturated or unsaturated hydroxy-containing fatty acid obtained from plants or a hydrogenated derivative of such an unsaturated fatty acid. In particular, a fatty acid having 15 to 20 carbon atoms is preferred. Among these, more preferred are a saturated or unsaturated hydroxy-containing fatty acid isolated from a natural fat/oil such as castor oil, Dimorphotheca oil, Lesquerella oil and Lesquerella densipila seed oil; and a hydrogenated derivative of such an unsaturated fatty acid. Particularly preferred is a fatty acid containing ricinoleic acid or 12-hydroxystearic acid as a main component. There may be also used a fatty acid obtained by hydroxylating an unsaturated fatty acid having no hydroxyl group such as oleic acid and linoleic acid, which are isolated from soybean oil, olive oil, rice bran oil or palm oil; and a hydroxylated plant-derived oil fatty acid such as a hydroxylated soybean oil fatty acid isolated after hydroxylating soybean oil.

When the hydroxycarboxylic acid is condensed with the polyhydric alcohol, the condensation may be carried out according to either a method in which the hydroxycarboxylic acid is condensed and the obtained polycondensate is condensed with the polyhydric alcohol, or a method in which the polyhydric alcohol and the hydroxycarboxylic acids are condensed and then the hydroxycarboxylic acids is further condensed. Of these methods, the former is preferably used.

As the lactone, there may be mentioned a β-lactone such as β-propiolactone, a γ-lactone such as γ-butyrolacton, a 5-lactone such as δ-valerolactone, an ε-lactone such as ε-caprolactone. β-Propiolactone and ε-caprolactone are preferred.

As the hydroxycarboxylic acid having a primary hydroxyl group, there may be mentioned a ring-opened product of the above lactone, such as 3-hydroxypropionic acid.
For the plant-derived polyol (A), wide variety of plant-derived raw materials may be used besides the above-mentioned raw materials. There may be mentioned, for example, glucose, which is mainly obtained from starch, lactic acid, which is a derivative of the glucose, 3-hydroxypropionic acid, succinic acid, 1,4-butanediol, a mixture or derivative thereof. Further, there may be also used cellulose, hemicellulose and lignin, which are obtained from wood, and a derivative thereof; sebacic acid, which is a derivative of a castor oil fatty acid, and a derivative thereof.

In the present invention, the acid value of the plant-derived polyol (A) is preferably 0.1 to 10 mgKOH/g, more preferably 0.3 to 8 mgKOH/g, and particularly preferably 0.5 to 5 mgKOH/g. The hydroxyl value is preferably 20 to 160 mgKOH/g, more preferably 30 to 100 mgKOH/g, and particularly preferably 40 to 80 mgKOH/g.

### (Bl) Polyether polyol

The polyether polyol (Bl) used in the present invention is a polyol commonly used for production of polyurethane foams, and its overall degree of unsaturation is 0.050 meq/g or less, preferably 0.040 meq/g or less, and more preferably 0.030 meq/g or less. The lower limit of the overall degree of unsaturation is not particularly limited, for example, 0.001 meq/g. A modified product of the polyether polyol (Bl) may be also used. These polyether polyols (Bl) may be used alone or as a mixture of two or more.

As the polyether polyol (B1), there may be mentioned an oligomer or a polymer that is obtained by performing ring-opening polymerization of an alkylene oxide with an active hydrogen-containing compound as a starting material, usually, in the presence of a catalyst, and that has an overall degree of unsaturation within the above range.

In general, it is known that when ring-opening polymerization of an alkylene oxide with a starting material is performed in the presence of a catalyst during producing a polyether polyol, a monol having an unsaturated group at the terminal of the molecular fragment is generated as a byproduct with the increase in molecular weight of the polyether polyol. The monol content is typically represented as an overall degree of unsaturation of a polyether polyol, and the smaller value indicates the lower content of the monol.

The monol in the polyether polyol, because it has a lower molecular weight than the polyether polyol which is a main component, causes a much wider molecular weight distribution and a reduced average functionality to the polyether polyol. When such a polyether polyol having a high content of monol is used for producing a polyurethane foam, the resultant polyurethane foam suffers from deterioration of various properties such as increase in hysteresis loss, decrease in hardness, deterioration of expandability, reduction of durability and reduction of curability. Here, the durability specifically refers to a wet heat compression set, which is an index representing a degree of decrease in thickness over long-term use as a cushion, and the like.

Further, as the monol content in a polyether polyol increases, more lattice defects are formed in the polyurethane foam obtained from this polyether polyol to decrease the crosslinking density, resulting in a tendency of increasing the swelling degree of the polyurethane foam in a polar organic solvent such as dimethylformamide. In general, regarding the relationship between the swelling degree and the crosslinking density, there is used the Flory-Rehner's equation in "Principle of Polymer Chemistry", Cornell University Press (1953), written by P. J. Flory, while the relationship between the monol content and the swelling degree in polar organic solvents is disclosed in "A Raw Materials System Concept for Wider Ranging Demands of Flexible Polyurethane Molded Foam" Polyurethane Expo 2002 Conference Proceedings (2002), pp. 75-82, written by Usaka et al. and the like.

Therefore, the content of the monol, which causes the deterioration of various properties of the polyurethane foam as mentioned above, is preferably smaller.

### (Catalyst)

There can be produced a polyether polyol (B1) having a low overall degree of unsaturation as mentioned above, that is, a low-monol content, for example, at least by using at least one compound selected from a compound having a nitrogen-phosphorus double bond, cesium hydroxide and rubidium hydroxide, as a catalyst. When the above compound is used as a catalyst, the amount of the monol generated as a byproduct can be reduced, as compared to the case where a conventional publicly-known alkali metal hydroxide such as potassium hydroxide is used as a catalyst, resulting in improvement of various properties of the obtained polyurethane foam. For example, when an alkali metal hydroxide was used as a catalyst, it was difficult to attain appropriate hardness and ball rebound and excellent durability in a balanced manner. In contrast, these properties can be attained well when the above compound is used as a catalyst. The excellent effects of the low-monol polyol are particularly apparent when used together with a plant-derived polyol, which typically contains impurities and is often inferior in performance compared to a polyol of petroleum origin.

The compound having a nitrogen-phosphorus double bond, although not particularly limited to, includes compounds described in Japanese Patent Laid-open Publication Nos. H11-106500, 2000-297131 and 2001-106780, among which a phosphazenium compound is preferred.

### (Active hydrogen-containing compound)

The active hydrogen-containing compound includes an active hydrogen-containing compound having an active hydrogen atom(s) on an oxygen atom and an active hydrogen-containing compound having an active hydrogen atom (s) on a nitrogen atom, and an active hydrogen-containing compound having 2 to 8 of functional groups is preferred.

As the active hydrogen-containing compound having an active hydrogen atom (s) on an oxygen atom, there may be mentioned water, carboxylic acids having 1 to 20 carbon atoms, polycarboxylic acids having 2 to 20 carbon atoms and 2 to 6 carboxyl groups in one molecule, carbamic acids, alcohols having 1 to 20 carbon atoms, polyhydric alcohols having 2 to 20 carbon atoms and 2 to 8 hydroxyl groups in one molecule, sugars and derivatives thereof, aromatic compounds having 6 to 20 carbon atoms and 1 or 3 hydroxyl groups in one molecule, polyalkylene oxides having 2 to 8 terminals, at least one of the terminals having a hydroxyl group, in one molecule.

As the active hydrogen-containing compound having an active hydrogen atom(s) on a nitrogen atom, there may be mentioned aliphatic or aromatic primary amines having 1 to 20 carbon atoms, aliphatic or aromatic secondary amines having 2 to 20 carbon atoms, polyamines having 2 to 20 carbon atoms and 2 to 3 primary or secondary amino groups in one molecule, saturated cyclic secondary amines having 4 to 20 carbon atoms, unsaturated cyclic secondary amines having 4 to 20 carbon atoms, cyclic polyamines having 4 to 20 carbon atoms and 2 to 3 secondary amino groups in one molecule, unsubstituted or N-monosubstituted acid amides having 2 to 20 carbon atoms, 5- to 7-membered cyclic amides, imides of dicarboxylic acids having 4 to 10 carbon atoms.

These active hydrogen-containing compounds may be used alone or as a mixture of two or more. Among these active hydrogen-containing compounds, preferred are polyhydric alcohols having 2 to 20 carbon atoms and 2 to 8 hydroxyl groups in one molecule, and more preferred are ethylene glycol, propylene glycol, diethylene glycol, dipropylene glycol, glycerin, diglycerin and pentaerythritol.

### (Alkylene oxide)

As the alkylene oxide, an alkylene oxide having 2 to 12 carbon atoms is preferred. Specifically, there may be mentioned ethylene oxide, propylene oxide, 1,2-butylene oxide, 2,3-butylene oxide, styrene oxide, cyclohexene oxide, epichlorohydrin, epibromohydrin, methyl glycidyl ether, allyl glycidyl ether and phenyl glycidyl ether. More preferred are ethylene oxide, propylene oxide, 1, 2-butylene oxide and styrene oxide, and particularly preferred are ethylene oxide and propylene oxide.

These alkylene oxides may be used alone or in combination of two or more. When these alkylene oxides are used in combination, a method of performing simultaneous addition-polymerization, a method of sequentially performing addition-polymerization, a method of repeating the sequential addition-polymerization, of a plurality of alkylene oxides may be adopted.

The polyether polyol (B1) can be produced under the reaction conditions and by production methods, which are described in Japanese Patent Laid-open Publication No. 2000-297131, Japanese Patent Laid-open Publication No. 2001-106780.

Among the polyether polyols (B1) thus obtained, preferred is a polyether polyol obtained by addition-polymerization of an alkylene oxide (s) containing ethylene oxide. The hydroxyl value of the polyether polyol (B1) is 10 to 40 mgKOH/g, preferably 20 to 38 mgKOH/g. The content of the constitution units derived from ethylene oxide (total oxyethylene content) is preferably 5% by mass or more and 30% by mass or less, more preferably 10% by mass or more and 20% by mass or less, with respect to 100% by mass of the total amount of the constitution units derived from the alkylene oxide (s) composing the polyether polyol (B1).

### <Specific polymer polyol>

In the present invention, the specific polyol may be used as it is, or it may be used as a polymer-dispersed polyol (hereinafter, also referred to as "specific polymer polyol") in which polymer particles obtained by radical polymerization of a compound having an unsaturated bond in the specific polyol are dispersed in the specific polyol. Further, the specific polyol and the specific polymer polyol may be used in combination.

The specific polymer polyol is preferably a polymer polyol obtained from the low-monol polyol (B) (hereinafter, also referred to as "polymer polyol (PB)"), more preferably a polymer polyol obtained from the polyether polyol (B1) (hereinafter, also referred to as "polymer polyol (PB1)"), and particularly preferably a polymer polyol obtained from the polyether polyol (B1) having a hydroxyl value of 15 mgKOH/g or more and 60 mgKOH/g or less.

The specific polymer polyol can be obtained by performing dispersion-polymerization of a compound having an unsaturated bond in the specific polyol using a radical initiator such as azobisisobutyronitrile, in the form of a dispersion in which vinyl polymer particles are dispersed in the specific polyol. The vinyl polymer particle, although it may be made of a polymer of the compound having an unsaturated bond, is preferably a polymer particle in which at least part of the compound having an unsaturated bond is grafted to the specific polyol used as a dispersion medium during the dispersion-polymerization.

As the compound having an unsaturated bond, there may be mentioned, for example, acrylonitrile, styrene and acrylamide, which are a compound having an unsaturated bond in the molecule. These compounds having an unsaturated bond may be used alone or as a mixture of two or more.

In producing the polymer polyol, a dispersion stabilizing agent, a chain transfer agent and the like may also be added, in addition to the compound having an unsaturated bond.
In the application to a seat pad for vehicles such as automobiles, it is preferred to use the low monol polyol (B) and the polymer polyol (PB) in combination. It is more preferred to use the polyether polyol (B1) and the polymer polyol (PB1) in combination.

### <Other polyols>

In addition to the specific polyol and/or the specific polymer polyol, there may be added, to the polyurethane foam composition of the present invention, any other polyols commonly used for production of polyurethane foams, if required. As other polyols, there may be mentioned, for example, a polyether polyol having an overall degree of unsaturation of more than 0.050 meq/g, a polymer polyol obtained from this polyether polyol or a polyester polyol.

### (Polyether polyol (C))

As the polyether polyol having an overall degree of unsaturation of more than 0.050 meq/g (hereinafter, also referred to as "polyether polyol (C) "), there may be mentioned an oligomer or a polymer that is obtained by ring-opening polimerization of an alkylene oxide, and that has an overall degree of unsaturation of more than 0.050 meq/g. Such a polyether polyol (C) can be generally obtained by performing ring-opening polymerization of an alkylene oxide using an active hydrogen-containing compound as a starting material in the presence of a catalyst such as an alkali metal hydroxide, for example, potassium hydroxide.

### (Active hydrogen-containing compound)

As the active hydrogen-containing compound, the active hydrogen-containing compounds listed as examples for the polyether polyol (B1) may be used. These active hydrogen-containing compounds may be used alone or in combination of two or more. Among these active hydrogen-containing compounds, preferred are polyhydric alcohols having 2 to 20 carbon atoms and 2 to 8 hydroxyl groups in one molecule, and more preferred are ethylene glycol, propylene glycol, diethylene glycol, dipropylene glycol, glycerin, diglycerin and pentaerythritol.

### (Alkylene oxide)

As the alkylene oxide, there may be mentioned the alkylene oxides listed as examples for the polyether polyol (B1). More preferred are ethylene oxide, propylene oxide, 1,2-butylene oxide and styrene oxide, and particularly preferred are ethylene oxide and propylene oxide.

These alkylene oxides may be used alone or in combination of two or more. In the case where these alkylene oxides are used in combination, there may be adopted a method of performing simultaneous addition-polymerization, a method of performing sequential addition-polymerization, a method of repeating the sequential addition polymerization, and the like of a plurality of alkylene oxides.

The polyether polyol (C) can be produced by using the catalysts, under reaction conditions, through production methods, which are described in "Revised Chemistry of Polymer Synthesis" 2nd Ed., 1st printing, Kagaku-dojin Publishing Company, Inc.(1989), pp. 172-180, written by Takayuki Ohtsu, "Polyurethane" 8th printing, Maki-Shoten Publishing Co.(1964), pp. 41-45, edited by Nobutaka Matsudaira and Tetsuro Maeda, and the like.

Among the polyether polyols (C) thus obtained, preferred is a polyether polyol obtained by addition-polymerization of an alkylene oxide(s) containing ethylene oxide. Further, the content of the constitution units derived from ethylene oxide (total oxyethylene content) is preferably 5% by mass or more and 30% by mass or less, more preferably 10% by mass or more and 20% by mass or less, with respect to 100% by mass of the total amount of the constitution units derived from the alkylene oxide(s) composing the polyether polyol (C).

### (Polymer polyol (PC))

The polymer polyol used as the other polyol includes a polymer polyol obtained from the polyether polyol (C) (hereinafter, also referred to as "polymer polyol (PC)"), and preferred is a polymer polyol obtained from the polyether polyol (C) having a hydroxyl value of 15 mgKOH/g or more and 60 mgKOH/g or less.

The polymer polyol (PC) can be obtained by performing dispersion-polymerization of a compound having an unsaturated bond in the polyether polyol (C) using a radical initiator such as azobisisobutyronitrile, in the form of a dispersion in which vinyl polymer particles are dispersed in the polyether polyol (C). The vinyl polymer particle, although it may be made of a polymer of the compound having an unsaturated bond, is preferably a polymer particle in which at least part of the compound having an unsaturated bond is grafted to the polyether polyol (C) used as a dispersion medium during the dispersion polymerization.

As the compound having an unsaturated bond, there may be mentioned the compound having an unsaturated bond listed as examples for the specific polymer polyol. These compounds having an unsaturated bond may be used alone or as a mixture of two or more. In producing the polymer polyol (PC), a dispersion stabilizing agent, a chain transfer agent and the like may be used together with the compound having an unsaturated bond.

### (Polyester polyol)

As the polyester polyol, there may be mentioned, for example, a condensate of a low molecular weight polyol with a carboxylic acid and a lactone-based polyol such as a ring-opening polymerization product of ε-caprolactone and a ring-opening polymerization product of β-methyl-δ-valerolactone.

As the low molecular weight polyol, there may be mentioned a diol having 2 to 10 carbon atoms such as ethylene glycol and propylene glycol; a triol having 2 to 10 carbon atoms such as glycerin, trimethylolpropane and trimethylolethane; a tetraol such as pentaerythritol and diglycerin; and a sugar such as sorbitol and sucrose.

As the carboxylic acid, there may be mentioned a dicarboxylic acid having 2 to 10 carbon atoms such as succinic acid, adipic acid, maleic acid, fumaric acid, phthalic acid and isophthalic acid; an acid anhydride having 2 to 10 carbon atoms such as succinic anhydride, maleic anhydride, and phthalic anhydride.

### <Polyol component>

The polyol component used in the present invention comprises at least the plant-derived polyol (A) and the low-monol polyol (B), and/or polymer polyols obtained from these polyols, and optionally contains other polyols.

In the present invention, the total amount of a plant-derived polyol (A) and a polymer polyol obtained from the polyol (A) (hereinafter, these are together referred to as "polyol component (a)") is preferably 15 to 95% by mass, more preferably 20 to 80% by mass, particularly preferably 25 to 70% by mass, with respect to 100% by mass of all the polyol components. Further, the total amount of a low-monol polyol (B) and a polymer polyol (PB) obtained from the low-monol polyol (B) (hereinafter, these are together referred to as "polyol component (b)") is preferably 5 to 85% by mass, more preferably 20 to 80% by mass, and particularly preferably 30 to 75% by mass, with respect to 100% by mass of all the polyol components.

When the polyol components (a) and (b) contain a specific polymer polyol, the content of vinyl polymer particles is preferably 3 to 40% by mass, and more preferably 5 to 35% by mass, with respect to 100% by mass of the total amount of the polyol components (a) and (b).

When the polyol component contains the other polyols, its content is preferably less than 80% by mass, more preferably 50% by mass or less, and particularly preferably 30% by mass or less, with respect to 100% by mass of all the polyol components.

The content of the polyol component (a) is preferably 5 to 90% by mass, more preferably 10 to 80% by mass, particularly preferably 15 to 75% by mass, with respect to 100% by mass of a polyurethane foam composition.

### <Water>

Water used in the present invention is reacted with a polyisocyanate to generate carbon dioxide, whereby a polyurethane resin can be foamed. The amount of water typically used is preferably 1.3 to 6.0 parts by mass, more preferably 1.8 to 5.0 parts by mass, and particularly preferably 2.0 to 4.0 parts by mass, with respect to 100 parts by mass of the total amount of the polyol components. When the amount of water used as a foaming agent is within the above range, the foaming is performed steadily and effectively.

As the foaming agent, there may be used a physical foaming agent such as hydrofluorocarbons (HFC-245fa, etc.), which were developed for the purpose of global environmental conservation, hydrocarbons (cyclopentane, etc.), carbon dioxide gas, and liquefied carbon dioxide in combination with water. Among them, in terms of reducing environmental burdens, carbon dioxide gas and liquefied carbon dioxide are preferred.

### <Catalyst>

The catalyst used in the present invention is used for the reaction of the polyol and/or the polymer polyol with the polyisocyanate, and a conventional publicly-known catalyst may be used without any particular limitation. For example, there may be preferably used aliphatic amines such as triethylenediamine, bis(2-dimethylaminoethyl) ether, 1-isobutyl-2-methylimidazole and morpholines; an organotin compound such as tin octanoate and dibutyltin dilaurate; and the like.

These catalysts may be used alone or in combination of two or more. The amount of the catalyst to be used is preferably 0.1 to 10 parts by mass with respect to 100 parts by mass of the total amount of the polyol components.

### <Surfactant>

As the surfactant used in the present invention, there may be used a conventional publicly-known surfactant without any particular limitation. In general, an organosilicon-based surfactant is preferably used. For example, there may be preferably used SRX-274C, SF-2969, SF-2961 and SF-2962 produced by Dow Corning Toray Silicon Co., Ltd., L-5309, L-3601, L-5307, L-3600, L-5366, SZ-1325 and SZ-1328 produced by Nippon Unicar Company Limited, and the like. The amount of the surfactant to be used is preferably 0.1 to 10 parts by mass, and more preferably 0.5 to 5 parts by mass, with respect to 100 parts by mass of the total amount of the polyol components.

### <Polyisocyanate>

The polyisocyanate used in the present invention is not particularly limited and includes, for example, conventional publicly-known polyisocyanates described in "Polyurethane Resin Handbook" 1st printing, Nikkan Kogyo Shimbun, Ltd. (1987), pp. 71-98, edited by Keiji Iwata. For example, there may be preferably used toluylene diisocyanate (the ratio of 2,4-TDI, 2,6-TDI and other isomers is not particularly limited, but the ratio of 2,4-TDI/2,6-TDI is preferably 80/20), polymethylene polyphenyl polyisocyanate (for example, Cosmonate M-200 produced by Mitsui Chemicals Polyurethanes, Inc.) or an urethane modified product thereof, or a mixture thereof.

When the polyisocyanate is a mixture of toluylene diisocyanate and another polyisocyanate, considering the balance of the durability and mechanical strength of the foam, the content of toluylene diisocyanate is preferably 50 to 99% by mass, more preferably 70 to 90% by mass, and particularly preferably 75 to 85% by mass, with respect to the total amount of the polyisocyanates.

In the present invention, it is desirable that each component is used so that the NCO index is preferably in the range of 0.70 to 1.30, more preferably in the range of 0.80 to 1.20. When the NCO index is within the above range, there can be obtained a polyurethane foam having suitable hardness and mechanical strength as well as suitable ball rebound, elongation percentage and moldability for a cushioning material. In the present invention, the NCO index means a value obtained by dividing the total number of isocyanate groups in the polyisocyanate by the total number of active hydrogens, which each react with an isocyanate group, in a hydroxyl group of a polyol, an amino group of a cross-linking agent and water. That is, if the number of isocyanate groups in the polyisocyanate is stoichiometrically equal to the number of the active hydrogens reacting with the isocyanate groups, the NCO index is 1.0.

### <Other auxiliaries>

For the polyurethane foam composition of the present invention, in addition to the above components, there may be used a chain extender, a cross-linking agent, a cell opener and, as other auxiliaries, additives commonly used in production of polyurethane foams such as a flame retardant, a pigment, an ultraviolet absorber, and an antioxidant, within a range where the objective of the present invention is not impaired.

As the additives, there may be mentioned the additives described in "Polyurethane" 8th printing, Maki Shoten (1964), pp. 134-137, edited by Nobutaka Matsudaira and Tetsuro Maeda, "Functional Polyurethane" 1st printing, CMC Inc. (1989), pp. 54-68, edited by Hitoshi Matsuo, Noriaki Kunii and Kiyosi Tanabe, and the like.

### [Polyurethane foam]

As the process for producing the polyurethane foam of the present invention, there may be adopted conventional publicly-known production methods as appropriate without any particular limitation. Specifically, there may be adopted any of a slab foaming process, a hot cure mold foaming process and a cold cure mold foaming process. In producing a seat pad for vehicles such as automobiles, a cold cure mold foaming process is preferred.

As the process for producing the polyurethane foam by a cold cure mold foaming process, a publicly-known cold cure mold process may be adopted. For example, a polyurethane foam having a given shape may be obtained as follows: a resin premix is prepared by premixing the specific polyol and/or the specific polymer polyol, water, the catalyst, the surfactant, and optionally the other polyols and the other auxiliaries, and then this resin premix and the polyisocyanate are blended, typically using a high-pressure foaming machine or a low-pressure foaming machine, so that the given NCO index is obtained, followed by injecting this mixture into a mold and performing reaction, foaming and curing.

The curing time is typically 30 sec to 30 min, the mold temperature is usually from room temperature to approximately 80°C, and the curing temperature is preferably from room temperature to approximately 150°C. Further, after curing, the cured material may be heated at a temperature range of 80 to 180°C to such an extent that the objective and effects of the present invention are not impaired.

The resin premix is typically mixed with the polyisocyanate using a high-pressure foaming machine or a low-pressure foaming machine. When a hydrolizable compound such as an organotin catalyst is used as a catalyst, in order to prevent the organotin catalyst from contacting with water, it is preferred that water and the organotin catalyst are injected each other through different paths into the foaming machine and mixed in the mixing head of the foaming machine. The viscosity of the resin premix used is preferably 2500 mPa·s or less considering the ease in mixing in the foaming machine and the moldability of a foam.

In this way, there can be obtained a plant-derived polyurethane foam that contributes reducing environmental burdens and attains appropriate hardness and ball rebound and excellent durability in a balanced manner. The appropriate ranges for hardness and ball rebound and the range for excellent durability of a polyurethane foam typically depend on the application.

For example, for a foam used in a seat cushion for vehicles such as automobiles, in which the core density is typically in the range of 40 to 75 kg/m³, the appropriate range for hardness, as represented by 25% ILD, is preferably 140 to 280 N/314cm² and more preferably 200 to 260 N/314cm². The appropriate range for ball rebound is preferably 45 to 75% and more preferably 55 to 70%. The range for excellent durability, as represented by the wet heat compression set, is preferably 14% or less and more preferably 12% or less.

For a foam used in a seat back for vehicles such as automobiles, in which the core density is typically in the range of 23 to 45 kg/m³ the appropriate range for hardness, as represented by 25% ILD, is preferably 60 to 180 N/314cm² and more preferably 80 to 160 N/314cm². The appropriate range for ball rebound is preferably 30 to 60% and more preferably 35 to 55%. The range for excellent durability, as represented by the wet heat compression set, is preferably 24% or less and more preferably 22% or less.

The term "to attain the appropriate ranges for hardness and ball rebound and the range for excellent durability in a balanced manner" means that the desired ranges are simultaneously satisfied for all the three properties: hardness, ball rebound and durability.

The polyurethane foam of the present invention can be suitably used as a cushioning material. Particularly, it can be suitably used as a seat pad in a seat cushion or a seat back for vehicles such as automobiles.

### [Examples]

Hereinafter, the present invention will be explained in more detail with reference to Examples, but the present invention is not limited to these Examples. The terms "parts" and "%" in Examples represent "parts by mass" and "% by mass", respectively. The analyses and measurements in Examples and Comparative Examples were performed in accordance with the following methods.

### (1) Core density (in Tables in Examples, core density is abbreviated as "Dco")

The measurement was performed in accordance with the measurement method of the apparent density described in JIS K-6400. In the present invention, the core density was measured for a cuboid foam sample prepared by removing the skin from a foam sample.

### (2) Foam hardness (in Tables in Examples, abbreviated as "25%ILD")

The measurement was performed in accordance with the method A described in JIS K-6400 for a foam having a thickness of 100 mm.

### (3) Ball rebound (in Tables in Examples, abbreviated as "BR")

The measurement was performed by the method described in JIS K-6400.

### (4) Wet heat compression set (in Tables in Examples, abbreviated as "WS")

The measurement was performed by the method described in JIS K-6400. The core portion having a size of 50 mm x 50 mm x 25 mm was cut out from the molded polyurethane foam to use as a test specimen for the measurement. The test specimen was compressed to its 50% thickness, sandwiched between two parallel flat plates, and kept under the conditions of 50°C and 95% relative humidity for 22 hr. The test specimen was taken out and at 30 min later, the thickness was measured and compared with the thickness before testing to determine the strain percentage.

### (5) Elongation percentage

The measurement was performed by the method described in JIS K-6400.

### (6) Acid value

The measurement was performed by the method described in JIS K-1557.

### (7) Hydroxyl value

The measurement was performed by the method described in JIS K-1557.

### (8) Total degree of unsaturation

The measurement was performed by the method described in JIS K-1557.

### <Synthesis of plant-derived polyols>

### (Synthesis Example 1)

A reactor equipped with a stirrer, a thermometer, a nitrogen inlet tube and a reflux condenser was charged with 1192 g (4 mol) of a castor oil fatty acid having an acid value of 188 mgKOH/g and 1200 g (4 mol) of a hydrogenated castor oil fatty acid having an acid value of 187 mgKOH/g as hydroxycarboxylic acids having more than 15 carbon atoms and OH group. The condensation reaction was performed under a nitrogen atmosphere at a temperature range of 180 to 230°C for 2 hr, during which the water generated was distilled off from the system, to obtain an oxycarboxylic acid oligomer having an acid value of 70 mgKOH/g. This oxycarboxylic acid oligomer corresponded to a 2.7-mer of an equimolar mixture of the castor oil fatty acid and the hydrogenated castor oil fatty acid.

Subsequently, to the above reactor were added 92 g (1 mol) of glycerin as a polyhydric alcohol and 2. 6 g (0.01 mol) of titanium lactate [(HO)₂Ti(C₃H₅O₃)₂] as a catalyst. The condensation reaction was performed at a temperature range of 180 to 230 °C for 8 hr, during which the water generated was distilled off from the system. After the completion of the reaction, the catalyst was removed to obtain plant-derived polyol (A5-1), which was liquid at ordinary temperature and had an acid value of 1.2 mgKOH/g and a hydroxyl value of 60 mgKOH/g.

### (Synthesis Example 2)

An oxycarboxylic acid oligomer having an acid value of 56 mgKOH/g was obtained in the same manner as in Synthesis Example 1, except that the amount of the castor oil fatty acid was changed to 1490 g (5 mol), the amount of the hydrogenated castor oil fatty acid to 1500 g (5 mol) and the condensation reaction time from 2 hr to 3 hr, to obtain . This oxycarboxylic acid oligomer corresponded to a 3.3-mer of an equimolar mixture of castor oil fatty acid and the hydrogenated castor oil fatty acid.

Subsequently, plant-derived polyol (A5-2) was obtained in the same manner as in Synthesis Example 1, except that the condensation reaction time was changed from 8 hr to 9 hr. The polyol (A5-2) was liquid at ordinary temperature and had an acid value of 1.6 mgKOH/g and a hydroxyl value of 49 mgKOH/g.

### (Synthesis Example 3)

To 1 mol (2340 g) of plant-derived polyol (A5-1), which was obtained in Synthesis Example 1 and had a hydroxyl value of 60 mgKOH/g, was added 0.01 mol (7.6 g) of tetrakis[tris(dimethylamino)phosphoranylidenamino] phosphonium hydroxide, and the mixture was dehydrated under reduced pressure at 100°C for 6 hr. Thereafter, addition polymerization with propylene oxide was carried out at a reaction temperature of 80°C under the maximum reaction pressure of 3.8 kg/cm², and then addition polymerization with ethylene oxide was carried out at a reaction temperature of 100°C under the maximum reaction pressure of 3.8 kg/cm² to obtain plant-derived polyol (A6-1) . The polyol (A6-1) had a hydroxyl value of 49 mgKOH/g and a terminal oxyethylene group content of 15% by mass.

### (Synthesis Example 4)

To 1 mol (2340 g) of plant-derived polyol (A5-1), which was obtained in Synthesis Example 1 and had a hydroxyl value of 60 mgKOH/g, were added 4.6 mol (525 g) of e-caprolactone and 0.02 mol (8.1 g) of tin octanoate. The ring-opening polymerization was performed at 140°C for 2 hr to obtain plant-derived polyol (A7-1), which had a hydroxyl value of 49 mgKOH/g.

### (Synthesis Example 5)

To 1 mol (2340 g) of plant-derived polyol (A5-1), which was obtained in Synthesis Example 1 and had a hydroxyl value of 60 mgKOH/g, were added 7.3 mol (657 g) of 3-hydroxypropionic acid and 0.01 mol (2.6 g) of titanium lactate. The condensation reaction was performed at a temperature range of 180 to 230°C for 8 hr, during which the water generated was distilled off from the system. After the completion of the reaction, the catalyst was removed to obtain plant-derived polyol (A8-1), which was liquid at ordinary temperature and had a hydroxyl value of 49 mgKOH/g.

The structures and the analytical values for the plant-derived polyols are shown in Tables 1-1 and 1-2.

**Table 1-1**

| Plant-derived polyol | A5-1 | A5-2 |
|---|---|---|
| Skeleton of hydroxycarboxylic acid | Skeleton derived from COFA and skeleton derived from hydrogenated COFA | Skeleton derived from COFA and skeleton derived from hydrogenated COFA |
| Skeleton of polyhydric alcohol | Skeleton derived from glycerin | Skeleton derived from glycerin |
| Acid value [mgKOH/g] | 1.2 | 1.6 |
| Hydroxyl value [mgKOH/g] | 60 | 49 |

| | | |
|---|---|---|
| COFA: castor oil fatty acid | | |

**Table 1-2**

| Plant-derived polyol | A6-1 | A7-1 | A8-1 |
|---|---|---|---|
| Skeleton of hydroxycarboxylic acid | Skeleton derived from COFA and skeleton derived from hydrogenated COFA | Skeleton derived from COFA and skeleton derived from hydrogenated COFA | Skeleton derived from COFA and skeleton derived from hydrogenated COFA |
| Skeleton of polyhydric alcohol | Skeleton derived from glycerin | Skeleton derived from glycerin | Skeleton derived from glycerin |
| Parent compound for terminal | PO/EO | ε-Caprolactone | 3-Hydroxypropionic acid |
| Hydroxyl value [mgKOH/g] | 49 | 49 | 49 |

| | | | |
|---|---|---|---|
| COFA: castor oil fatty acid PO: Propylene oxide EO: Ethylene oxide | | | |

### <Synthesis of low-monol polyols>

### (Synthesis Example 6)

To 1 mol of glycerin, were added 0.01 mol of tetrakis[tris(dimethylamino)phosphoranylidenamino] phosphonium hydroxide, and then the mixture was dehydrated under reduced pressure at 100°C for 6 hr. Thereafter, addition polymerization with propylene oxide was carried out at a reaction temperature of 80°C under the maximum reaction pressure of 3.8 kg/cm², and then addition polymerization with ethylene oxide was carried out at a reaction temperature of 100°C under the maximum reaction pressure of 3. 8 kg/cm² to obtain polyether polyol (B1-1). The polyol (B1-1) had an overall degree of unsaturation of 0.020 meq/g, a hydroxyl value of 24 mgKOH/g and a terminal oxyethylene group content of 15% by mass.

### (Synthesis Example 7)

Polyether polyol (B1-2) was obtained in the same manner as in Synthesis Example 6, except that the amount of propylene oxide and ethylene oxide fed in the addition polymerization was reduced. The polyol (B1-2) had an overall degree of unsaturation of 0.012 meq/g, a hydroxyl value of 34 mgKOH/g and a terminal oxyethylene group content of 15% by mass.

### (Synthesis Example 8)

A 1-liter pressure-resistant autoclave equipped with a thermometer, a stirrer, a pressure gauge and a liquid feeder was charged, upto the full volume, with polyether polyol (B1-2), which was obtained in Synthesis Example 7 and had a hydroxyl value of 34 mgKOH/g, and the temperature was raised to 120°C with stirring. With continuously feeding a mixed solution containing polyether polyol (B1-2), a radical polymerization initiator, acrylonitrile, styrene and a dispersion stabilizer, graft polymerization of acrylonitrile and styrene was carried out under conditions of a reaction temperature of 120°C, a reaction pressure of 440 kPa and a retention time of 50 min. After the initial distillate was removed from the discharge outlet, the reaction solution was continuously collected. The amounts of the raw materials used here are as follows.

| | |
|---|---|
| Polyether polyol (B1-2) | 7500 g |
| (Total of the amount charged to the autoclave and the amount used in the mixed solution) | |
| Radical polymerization initiator | 50 g |
| Acrylonitrile | 1500 g |
| Styrene | 500 g |
| Dispersion stabilizer | 500 g |

The following radical polymerization initiator and dispersion stabilizer were used.

### Radical polymerization initiator: 2,2'-azobis(2-isobutyronitrile)

Dispersion stabilizer: A polyether ester polyol having a hydroxyl value of 29 mgKOH/g, which was obtained by reacting maleic anhydride and ethylene oxide with a polyol having a hydroxyl value of 34 mgKOH/g and a terminal oxyethylene content of 14% by mass obtained by procedures in which glycerin was subjected to addition polymerization with propylene oxide and then with ethylene oxide using potassium hydroxide as a catalyst.

The resultant reaction solution was heated at 120°C under a pressure of 655 Pa or less for 3 hr to remove unreacted acrylonitrile and styrene, the decomposed material of the radical polymerization initiator and the like, thereby to obtain polymer polyol (PB1-2) having a hydroxyl value of 28 mgKOH/g. The vinyl polymer content of this polymer polyol was 20% by mass (the total amount of acrylonitrile and styrene used was 20% by mass with respect to 100% by mass of the total amount of polyether polyol (B1-2), acrylonitrile and styrene used).

The structures and the analytical values for polyether polyols (B1-1) and (B1-2) and polymer polyol (PB1-2) are shown in Table 2.

**Table 2**

| Polyether polyol or Polymer polyol | B1-1 | B1-2 | PB1-2 |
|---|---|---|---|
| Skeleton of active hydrogen-containing compound | Skeleton derived from glycerin | Skeleton derived from glycerin | Skeleton derived from glycerin |
| Hydroxy value [mgKOH/g] | 24 | 34 | 28 |
| Terminal oxyethylene content [% by mass] | 15 | 15 | 15 |
| Total degree of unsaturation [meq/g] | 0.020 | 0.012 | 0.012 |

| | | | |
|---|---|---|---|
| The terminal oxyethylene content and the overall degree of unsaturation for the polymer polyol are the values for the base polyol itself. | | | |

### <Synthesis of other polyols>

### (Synthesis Example 9)

To 1 mol of glycerin, were added 0.37 mol of potassium hydroxide, and then the mixture was dehydrated under reduced pressure at 100°C for 6 hr. Thereafter, addition polymerization with propylene oxide was carried out at a reaction temperature of 115°C under the maximum reaction pressure of 5.0 kg/cm², and then addition polymerization with ethylene oxide was carried out at a reaction temperature of 115°C under the maximum reaction pressure of 3.8 kg/cm² to obtain polyether polyol (C-1). The polyol (C-1) had an overall degree of unsaturation of 0.093 meq/g, a hydroxyl value of 24 mgKOH/g and a terminal oxyethylene content of 15% by mass.

### (Synthesis Example 10)

Polyether polyol (C-2) was obtained in the same manner as in Synthesis Example 9, except that the amounts of propylene oxide and ethylene oxide fed in the addition polymerization were reduced. The polyol (C-2) had an overall degree of unsaturation of 0.051 meq/g, a hydroxyl value of 34 mgKOH/g and a terminal oxyethylene content of 15% by mass.

### (Synthesis Example 11)

A 1-liter pressure-resistant autoclave equipped with a thermometer, a stirrer, a pressure gauge and a liquid feeder was charged, up to its full volume, with polyether polyol (C-2), which was obtained in Synthesis Example 10 and had a hydroxyl value of 34 mgKOH/g, and the temperature was raised to 120°C with stirring. With continuously feeding a mixed solution containing polyether polyol (C-2), a radical polymerization initiator, acrylonitrile, styrene and a dispersion stabilizer, graft polymerization of acrylonitrile and styrene was carried out under conditions of a reaction temperature of 120°C, a reaction pressure of 440 kPa and a retention time of 50 min. After the initial distillate was removed from the discharge outlet, the reaction solution was continuously collected. The amounts of the raw materials used here are as follows.

| | |
|---|---|
| Polyether polyol (C-2) | 7500g |
| (Total of the amount charged to the autoclave and the amount used in the mixed solution) | |
| Radical polymerization initiator | 50 g |
| Acrylonitrile | 1500 g |
| Styrene | 500 g |
| Dispersion stabilizer | 500 g |

The radical polymerization initiator and the dispersion stabilizer were the same as Synthesis Example 8.

The resultant reaction solution was heated at 120°C under a pressure of 655 Pa or less for 3 hr to remove unreacted acrylonitrile and styrene, the decomposed material of the radical polymerization initiator and the like, thereby to obtain polymer polyol (PC-2) having a hydroxyl value of 28 mgKOH/g. The vinyl polymer content of this polymer polyol was 20% by mass (the total amount of acrylonitrile and styrene used was 20% by mass with respect to 100 % by mass of the total amount of polyether polyol (C-2), acrylonitrile and styrene used).

The structures and the analytical values for polyether polyols (C-1) and (C-2) and polymer polyol (PC-2) are shown in Table 3.

**Table 3**

| Polyether polyol or Polymer polyol | C-1 | C-2 | PC-2 |
|---|---|---|---|
| Skeleton of active hydrogen-containing compound | Skelton derived from glycerin | Skelton derived from glycerin | Skelton derived from glycerin |
| Hydroxyl value [mgKOH/g] | 24 | 34 | 28 |
| Terminal oxyethylene content [% by mass] | 15 | 15 | 15 |
| Total degree of unsaturation [meq/g] | 0.093 | 0.051 | 0.051 |

| | | | |
|---|---|---|---|
| The terminal oxyethylene content and the overall degree of unsaturation for the polymer polyol are the values for the base polyol itself. | | | |

### [Examples 1 to 7 and Comparative Examples 1 to 7]

Flexible polyurethane foams were produced using the polyether polyols and the polymer polyols, which were synthesized in Synthesis Examples, by the cold cure mold foaming process. Assuming that the flexible polyurethane foam is used for a seat cushion for vehicles such as automobiles, the core density was set in the range of 57.5 to 58.8 kg/m³. There were used the following polyisocyanate, crosslinking agent, cell opener, surfactant and catalyst:

Polyisocyanate 1: Cosmonate TM-20 (produced by Mitsui Chemicals Polyurehtanes, Inc.; a mixture consisting of 80 parts of a mixture of 2,4-toluylene diisocyanate and 2,6-toluylene diisocyanate in a mass ratio of 80:20 and 20 parts of polymethylene polyphenylene polyisocyanate);

Crosslinking agent 1: Actcol KL-210 (produced by Mitsui Chemicals Polyurethanes, Inc.; hydroxyl value: 850 mgKOH/g);
Cell opener 1: Actcol EP-5055 (produced by Mitsui Chemicals Polyurethanes, Inc.; hydroxyl value: 52 mgKOH/g);
Surfactant 1: Silicon-based surfactant L-5366 (produced by Nippon Unicar Company Limited); and

Catalyst 1: Amine catalyst Minico R-9000 (produced by Katsuzai Chemicals Corp.; 1-isobutyl-2-methylimidazole).

### (Formulations and results of evaluation for foaming)

A resin premix was prepared by mixing the components listed in Table 4. The polyisocyanate was mixed with the resin premix in an amount equivalent to the NCO index listed in Table 4, and the mixture was immediately injected into a mold which had an inside dimension of 300 mm × 300 mm × 100 mm and of which the temperature was adjusted to 60°C in advance, and the mixture was foamed after closing the cover. Thermal curing was performed at 100°C in a hot air oven for 5 min to obtain a flexible polyurethane foam by the cold cure mold foaming process. The properties of the obtained flexible polyurethane foams are shown in Tables 4 and 5.

**Table 4**

| | Suitable range | Examples | | | | | | |
|---|---|---|---|---|---|---|---|---|
| | | 1 | 2 | 3 | 4 | 5 | 6 | 7 |
| Polyisocyanate 1 NCO Index | | 33.1 1.00 | 32.6 1.00 | 32.6 1.00 | 32.6 1.00 | 32.6 1.00 | 33.5 1.00 | 34.1 1.00 |
| Plant-derived polyol (A5-1) | | 28 | - | - | - | - | 28 | 43 |
| Plant-derived polyol (A5-2) | | - | 28 | - | - | - | - | - |
| Plant-derived polyol (A6-1) | | - | - | 28 | - | - | - | - |
| Plant-derived polyol (A7-1) | | - | - | - | 28 | - | - | - |
| Plant-derived polyol (A8-1) | | - | - | - | - | 28 | - | - |
| Polyether polyol (B1-1) | | 22 | 22 | 22 | 22 | 22 | - | 7 |
| Polyether polyol (B1-2) | | - | - | - | - | - | 22 | - |
| Polymer polyol (PB1-1) | | 50 | 50 | 50 | 50 | 50 | 50 | 50 |
| Polyether polyol (C-1) | | | | | | | | |
| Polyether polyol (C-2) | | | | | | | | |
| Polymer polyol (PC-2) | | | | | | | | |
| Crosslinking agent 1 | | 2 | 2 | 2 | 2 | 2 | 2 | 2 |
| Cell destructing agent 1 | | 2 | 2 | 2 | 2 | 2 | 2 | 2 |
| Water | | 2.3 | 2.3 | 2.3 | 2.3 | 2.3 | 2.3 | 2.3 |
| Surfactant 1 | | 1 | 1 | 1 | 1 | 1 | 1 | 2 |
| Catalyst 1 | | 1.5 | 1.5 | 1.5 | 1.5 | 1.5 | 1.5 | 2 |
| Plant-derived polyol content | | | | | | | | |
| In composition [% by mass] | | 20 | 20 | 20 | 20 | 20 | 20 | 30 |
| In all the polyols [% by mass] | | 28 | 28 | 28 | 28 | 28 | 28 | 43 |
| Dco [kg/m³] | | 57.8 | 57.6 | 58.3 | 58.0 | 57.9 | 58.1 | 57.8 |
| BR [%] | 45-75 | 56 | 58 | 60 | 59 | 59 | 50 | 50 |
| 25%ILD [N/314cm²] | 140-280 | 218 | 207 | 209 | 210 | 208 | 242 | 229 |
| Elongation percentage [%] | | 108 | 111 | 113 | 115 | 116 | 101 | 98 |
| WS[%] | ≤14 | 11.2 | 10.2 | 10.5 | 10.7 | 10.4 | 13.0 | 13.9 |
| Property balance (Hardness, BR, WS) | | Good | Good | Good | Good | Good | Good | Good |

| | | | | | | | | |
|---|---|---|---|---|---|---|---|---|
| The unit for amount of component: parts by mass | | | | | | | | |

**Table 5**

| | Suitable range | Comparative Examples | | | | | | |
|---|---|---|---|---|---|---|---|---|
| | | 1 | 2 | 3 | 4 | 5 | 6 | 7 |
| Polyisocyanate 1 NCO Index | | 33.1 1.00 | 32.6 1.00 | 32.6 1.00 | 32.6 1.00 | 32.6 1.00 | 33.5 1.00 | 34.1 1.00 |
| Plant-derived polyol (A5-1) | | 28 | - | - | - | - | 28 | 43 |
| Plant-derived polyol (A5-2) | | - | 28 | - | - | - | - | - |
| Plant-derived polyol (A6-1) | | - | - | 28 | - | - | - | - |
| Plant-derived polyol (A7-1) | | - | - | - | 28 | - | - | - |
| Plant-derived polyol (A8-1) | | - | - | - | - | 28 | - | - |
| Polyether polyol (B1-1) | | | | | | | | |
| Polyether polyol (B 1-2) | | | | | | | | |
| Polymer polyol (PB1-1) | | | | | | | | |
| Polyether polyol (C-1) | | 22 | 22 | 22 | 22 | 22 | - | 7 |
| Polyether polyol (C-2) | | - | - | - | - | - | 22 | - |
| Polymer polyol (PC-2) | | 50 | 50 | 50 | 50 | 50 | 50 | 50 |
| Crosslinking agent 1 | | 2 | 2 | 2 | 2 | 2 | 2 | 2 |
| Cell destructing agent 1 | | 2 | 2 | 2 | 2 | 2 | 2 | 2 |
| Water | | 2.3 | 2.3 | 2.3 | 2.3 | 2.3 | 2.3 | 2.3 |
| Surfactant 1 | | 1 | 1 | 1 | 1 | 1 | 1 | 2 |
| Catalyst 1 | | 1.5 | 1.5 | 1.5 | 1.5 | 1.5 | 1.5 | 2 |
| Plant-derived polyol content | | | | | | | | |
| In composition [% by mass] | | 20 | 20 | 20 | 20 | 20 | 20 | 30 |
| In the whole polyol [% by mass] | | 28 | 28 | 28 | 28 | 28 | 28 | 43 |
| Dco [kg/m³] | | 57.6 | 58.2 | 57.9 | 57.9 | 58.0 | 57.6 | 58.0 |
| BR [%] | 45-75 | 52 | 53 | 54 | 54 | 53 | 46 | 46 |
| 25%ILD [N/314cm²] | 140-280 | 190 | 179 | 180 | 176 | 177 | 209 | 198 |
| Elongation percentage [%] | | 103 | 107 | 106 | 107 | 105 | 90 | 91 |
| WS[%] | ≤14 | 16.3 | 15.8 | 15.6 | 15.9 | 15.7 | 17.6 | 19.8 |
| Property balance (Hardness, BR, WS) | | Poor | Poor | Poor | Poor | Poor | Poor | Poor |

| | | | | | | | | |
|---|---|---|---|---|---|---|---|---|
| The unit for amount of component: parts by mass | | | | | | | | |

As is seen in Tables 4 and 5, the flexible polyurethane foams obtained in Examples 1 to 7 are excellent in any of hardness, ball rebound, wet heat compression set and elongation percentage, as compared to those of Comparative Examples 1 to 7. Particularly, for the flexible polyurethane foams obtained in Examples 1 to 7, three properties that are hardness, ball rebound and wet heat compression set are simultaneously within the ranges suitable for the application to a seat cushion for vehicles such as automobiles. That is, it is proved that the plant-derived polyurethane foam of the present invention can exhibit durability and appropriate hardness and ball rebound in a balanced manner and has suitable properties for a plant-derived cushioning material that can contribute to reducing environmental burdens.

Further, the polyurethane foam obtained in Comparative Example 7 exhibits even poorer balance among the appropriate hardness and ball rebound and the durability. This is because the content of the plant-derived polyol in the composition increases upto 30% by mass compared with that in Comparative Example 1. In contrast, for the flexible polyurethane foam obtained in Example 7, even when the content of the plant-derived polyol in the composition is increased up to 30% by mass compared to that in Example 1, the three properties that are hardness, ball rebound and wet heat compression set are simultaneously within the ranges suitable for the application to a seat cushion for vehicles such as automobiles. That is, the plant-derived polyurethane foam of the present invention can attain durability and appropriate hardness and ball rebound in a balanced manner even when the amount of the plant-derived polyols is increased, and hence it is useful as a cushioning material with greater contribution to reducing environmental burdens.

The polyurethane foam composition of the present invention can provide a plant-derived polyurethane foam that contributes to reducing environmental burdens and attains appropriate hardness and ball rebound and excellent durability in a balanced manner, and is useful for a cushioning material. Particularly, the polyurethane foam composition can be suitably used as a seat pad of a vehicle seat cushion or of a vehicle seat back in automobiles.

## Claims

1. A polyurethane foam composition comprising at least water, a catalyst, a surfactant, a polyisocyanate, and a polyol and/or a polymer-dispersed polyol (a polymer polyol) in which polymer fine particles obtained by polymerizing a compound having an unsaturated bond are dispersed in a polyol,
wherein the polyol comprises at least
(A) a plant-derived polyol produced by using a raw material obtained from plants, and
(Bl) a polyether polyol having an overall degree of unsaturation of 0.050 meq/g or less and a hydroxyl value of 10 to 40 mgKOH/g,
wherein the total amount of the plant-derived polyol (A) and a polymer polyol obtained from the polyol (A) is 15 to 95% by mass with respect to 100% by mass of all the polyol components, and
wherein the total amount of the polyether polyol (Bl) and a polymer polyol (PB) obtained from the polyether polyol (Bl) is 5 to 85% by mass with respect to 100% by mass of all the polyol components, and
wherein the plant-derived polyol (A) is one or more kinds of plant-derived polyols selected from:
a plant-derived polyester polyol (A5) having at least a structure in which 6 to 30 mol of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in said castor oil fatty acid,
a polyol (A6) given by further adding propylene oxide and/or ethylene oxide to said plant-derived polyester polyol (A5),
a polyol (A7) given by further adding a lactone to said plant-derived polyester polyol (A5), and
a polyol (A8) given by further adding a hydroxycarboxylic acid having a primary hydroxyl group to said plant-derived polyester polyol (A5).

2. The polyurethane foam composition according to Claim 1, wherein the polyether polyol (Bl) is obtained by polymerizing an alkylene oxide (s) containing ethylene oxide with an active hydrogen-containing compound having 2 to 8 of functional groups, the polyether polyol having a hydroxyl value of 10 to 40 mgKOH/g and a ratio of the constitution units derived from ethylene oxide is 5 to 30% by mass with respect to 100% by mass of all the constitution units derived from the alkylene oxide(s).

3. A polyol and/or a polymer-dispersed polyol (a polymer polyol) in which polymer fine particles obtained by polymerizing a compound having an unsaturated bond are dispersed in a polyol,
wherein the polyol comprises at least:
(A) a plant-derived polyol produced by using a raw material obtained from plants, and
(Bl) a polyether polyol having an overall degree of unsaturation of 0.050 meq/g or less and a hydroxyl value of 10 to 40 mgKOH/g, wherein the total amount of the plant-derived polyol (A) and a polymer polyol obtained from the polyol (A) is 15 to 95% by mass with respect to 100% by mass of all the polyol components,
wherein the total amount of the polyether polyol (Bl) and a polymer polyol (PB) obtained from the polyethers polyol (Bl) is 5 to 85% by mass with respect to 100% by mass of all the polyol components, and
wherein the plant-derived polyol (A) is one or more kinds of plant-derived polyols selected from:
a plant-derived polyester polyol (A5) having at least a structure in which 6 to 30 mol of a hydroxycarboxylic acid are condensed with 1 mol of a polyhydric alcohol having 2 to 6 hydroxyl groups per molecule, wherein the hydroxycarboxylic acid contains a castor oil fatty acid containing, as a main component, ricinoleic acid obtained from castor oil and/or a hydrogenated castor oil fatty acid containing, as a main component, 12-hydroxystearic acid given by saturating the carbon-carbon double bonds in said castor oil fatty acid,
a polyol (A6) given by further adding propylene oxide and/or ethylene oxide to said plant-derived polyester polyol (A5),
a polyol (A7) given by further adding a lactone to said plant-derived polyester polyol (A5), and
a polyol (A8) given by further adding a hydroxycarboxylic acid having a primary hydroxyl group to said plant-derived polyester polyol (A5).

4. A polyurethane foam obtainable by foaming the polyurethane foam composition according to Claims 1 or 2.

5. A process for producing polyurethane foams comprising foaming the polyurethane foam composition according to Claim 1 or 2.

6. A vehicle seat pad comprising the polyurethane foam according to Claim 4.

7. A vehicle seat pad according to Claim 6, which is a seat cushion.

8. A vehicle seat pad according to Claim 6, which is a seat back.

9. Use of a polyurethane foam according to Claim 4 as a seat pad for a vehicle.

10. Use according to claim 9, wherein the seat pad is a seat cushion or a seat back.

## Patentansprüche

1. Polyurethanschaumzusammensetzung, umfassend zumindest Wasser, einen Katalysator, ein Tensid, ein Polyisocyanat, und ein Polyol und/oder ein polymerdispergiertes Polyol (ein Polymer-Polyol) in welchem feine Polymerpartikel, erhalten durch Polymerisieren einer Verbindung mit einer ungesättigten Bindung, in einem Polyol dispergiert sind, wobei das Polyol zumindest umfasst:
(A) ein pflanzliches Polyol, hergestellt durch Verwendung eines aus Pflanzen erhaltenen Rohmaterials, und
(B') ein Polyetherpolyol mit einem Gesamt-Unsättigungsgrad von 0,050 meq/g oder weniger und einer Hydroxylzahl von 10 bis 40 mgKOH/g,
wobei die Gesamtmenge des pflanzlichen Polyols (A) und des Polymerpolyols, erhalten aus dem Polyol (A), 15 bis 95 Massen% bezüglich 100 Massen% der gesamten Polyolkomponenten beträgt, und
wobei die Gesamtmenge des Polyetherpolyols (B') und eines Polymerpolyols (PB), erhalten aus dem Polyetherpolyol (B'), 5 bis 85 Massen% bezüglich 100 Massen% der gesamten Polyolkomponenten beträgt, und
wobei das pflanzliche Polyol (A) eine Art oder mehrere Arten eines pflanzlichen Polyols bzw. pflanzlicher Polyole ist, ausgewählt aus:
einem pflanzlichen Polyesterpolyol (A5), mit mindestens einer Struktur, wobei 6 bis 30 mol einer Hydroxycarbonsäure mit einem Mol eines mehrwertigen Alkohols mit 2 bis 6 Hydroxylgruppen pro Molekül kondensiert sind, wobei die Hydroxycarbonsäure eine Castoröl-Fettsäure enthält, die als Hauptkomponente Rhezinolsäure enthält, erhalten aus Castoröl, und/oder eine hydrierte Castorölfettsäure, enthaltend als Hauptkomponente 12-Hydroxystearinsäure, die durch Sättigen der Kohlenstoff-Kohlenstoff-Doppelbindungen in der Castorölfettsäure erhalten wird,
einem Polyol (A6), erhalten durch zusätzlich Zugeben von Propylenoxid und/oder Ethylenoxid zum pflanzlichen Polyesterpolyol (A5),
einem Polyol (A7), erhalten durch zusätzlich Zugeben eines Lactons zum pflanzlichen Polyesterpolyol (A5), und
einem Polyol (A8), erhalten durch zusätzlich Zugeben einer Hydroxycarbonsäure mit einer primären Hydroxylgruppe zum pflanzlichen Polyesterpolyol (A5).

2. Polyurethanschaumzusammensetzung gemäß Anspruch 1, wobei das Polyetherpolyol (B1) erhalten wird durch Polymerisieren eines Alkylenoxids bzw. von Alkylenoxiden, enthaltend Ethylenoxid mit einer Aktivwasserstoff-haltigen Verbindung mit 2 bis 8 funktionellen Gruppen, wobei das Polyetherpolyol eine Hydroxylzahl von 10 bis 40 mgKOH/g besitzt, und das Verhältnis der konstitutionellen Einheiten, abgeleitet von Ethylenoxid, ist 5 bis 30 Massen% bezüglich 100 Massen% der gesamten konstitutionellen Einheiten, abgeleitet von dem Alkylenoxid beziehungsweise den Alkylenoxiden.

3. Polyol und/oder polymerdispergiertes Polyol (ein Polymerpolyol) in welchem feine Polymerpartikel, erhalten durch Polymerisieren einer Verbindung mit einer ungesättigten Bindung, in einem Polyol dispergiert sind, wobei das Polyol zumindest umfasst:
(A) ein pflanzliches Polyol, hergestellt durch Verwendung eines aus Pflanzen erhaltenen Rohmaterials, und
(B') ein Polyetherpolyol mit einem Gesamt-Unsättigungsgrad von 0,050 meq/g oder weniger und einer Hydroxylzahl von 10 bis 40 mgKOH/g,
wobei die Gesamtmenge des pflanzlichen Polyols (A) und des Polymerpolyols, erhalten aus dem Polyol (A), 15 bis 95 Massen% bezüglich 100 Massen% der gesamten Polyolkomponenten beträgt, und
wobei die Gesamtmenge des Polyetherpolyols (B') und eines Polymerpolyols (PB), erhalten aus dem Polyetherpolyol (B'), 5 bis 85 Massen% bezüglich 100 Massen% der gesamten Polyolkomponenten beträgt, und
wobei das pflanzliche Polyol (A) eine Art oder mehrere Arten eines pflanzlichen Polyols bzw. pflanzlicher Polyole ist, ausgewählt aus:
einem pflanzlichen Polyesterpolyol (A5), mit mindestens einer Struktur, wobei 6 bis 30 mol einer Hydroxycarbonsäure mit einem Mol eines mehrwertigen Alkohols mit 2 bis 6 Hydroxylgruppen pro Molekül kondensiert sind, wobei die Hydroxycarbonsäure eine Castoröl-Fettsäure enthält, die als Hauptkomponente Rhezinolsäure enthält, erhalten aus Castoröl, und/oder eine hydrierte Castorölfettsäure, enthaltend als Hauptkomponente 12-Hydroxystearinsäure, die durch Sättigen der Kohlenstoff-Kohlenstoff-Doppelbindungen in der Castorölfettsäure erhalten wird,
einem Polyol (A6) erhalten durch zusätzlich Zugeben von Propylenoxid und/oder Ethylenoxid zum pflanzlichen Polyesterpolyol (A5),
einem Polyol (A7), erhalten durch zusätzlich Zugeben eines Lactons zum pflanzlichen Polyesterpolyol (A5), und
einem Polyol (A8), erhalten durch zusätzlich Zugeben einer Hydroxycarbonsäure mit einer primären Hydroxylgruppe zum pflanzlichen Polyesterpolyol (A5).

4. Polyurethanschaum, erhältlich durch Schäumen der Polyurethanschaumzusammensetzung gemäß Anspruch 1 oder 2.

5. Verfahren zur Herstellung von Polyurethanschäumen, umfassend Schäumen der Polyurethanschaumzusammensetzung gemäß Anspruch 1 oder 2.

6. Fahrzeugsitzpolster, umfassend den Polyurethanschaum gemäß Anspruch 4.

7. Fahrzeugsitzpolster gemäß Anspruch 6, welches ein Sitzkissen ist.

8. Fahrzeugsitzpolster gemäß Anspruch 6, welches eine Sitzrückenlehne ist.

9. Verwendung des Polyurethanschaums gemäß Anspruch 4 als Sitzpolster für ein Fahrzeug.

10. Verwendung gemäß Anspruch 9, wobei das Sitzpolster ein Sitzkissen oder eine Sitzrückenlehne ist.

## Revendications

1. Composition pour mousse de polyuréthane, comprenant au moins de l'eau, un catalyseur, un tensioactif, un polyisocyanate, et un polyol et/ou une dispersion polymère/polyol (ou "polymère-polyol") dans laquelle de fines particules de polymère obtenues par polymérisation d'un composé doté d'une liaison insaturée se trouvent dispersées dans un polyol,
dans laquelle le polyol comprend au moins :
A) un polyol d'origine végétale, produit à partir d'une matière brute obtenue à partir de végétaux,
B1) et un polyéther-polyol présentant un degré global d'insaturation inférieur ou égal à 0,050 méq/g et un indice d'hydroxyle valant de 10 à 40 mgKOH/g,
dans laquelle la quantité totale du polyol d'origine végétale (A) et de polymère-polyol obtenu à partir du polyol (A) représente de 15 à 95 % de la masse totale (100 %) des composants polyols,
dans laquelle la quantité totale du polyéther-polyol (B1) et de polymère-polyol (PB) obtenu à partir du polyéther-polyol (B1) représente de 5 à 85 % de la masse totale (100 %) des composants polyols,
et dans laquelle le polyol d'origine végétale (A) consiste en un ou plusieurs polyol(s) d'origine végétale, choisi(s) parmi les suivants :
- un polyester-polyol d'origine végétale (A5), comportant au moins une structure résultant de la condensation de 6 à 30 moles d'un acide hydroxy-carboxylique avec 1 mole d'un polyol doté de 2 à 6 groupes hydroxyle par molécule, étant entendu que cet acide hydroxy-carboxylique renferme des acides gras d'huile de ricin comprenant, en tant que composant principal, de l'acide ricinoléique issu d'huile de ricin et/ou des acides gras d'huile de ricin hydrogénée comprenant, en tant que composant principal, de l'acide 12-hydroxy-stéarique obtenu par saturation des doubles liaisons carbone-carbone présentes dans lesdits acides gras d'huile de ricin,
- un polyol (A6) obtenu par addition, en sus, d'oxyde d'éthylène et/ou d'oxyde de propylène audit polyester-polyol d'origine végétale (A5),
- un polyol (A7) obtenu par addition, en sus, d'une lactone audit polyester-polyol d'origine végétale (A5),
- et un polyol (A8) obtenu par addition, en sus, d'un acide hydroxy-carboxylique doté d'un groupe hydroxyle de fonction alcool primaire audit polyester-polyol d'origine végétale (A5).

2. Composition pour mousse de polyuréthane, conforme à la revendication 1, pour laquelle le polyéther-polyol (B1) a été obtenu par polymérisation d'oxyde(s) d'alkylène, incluant de l'oxyde d'éthylène, avec un composé comportant des atomes d'hydrogène réactifs et de 2 à 8 groupes fonctionnels, lequel polyéther-polyol présente un indice d'hydroxyle valant de 10 à 40 mgKOH/g et comporte des motifs constitutifs dérivés de l'oxyde d'éthylène en une proportion de 5 à 30 %, en masse rapportée à la masse totale (100 %) des motifs constitutifs dérivés d'oxyde(s) d'alkylène.

3. Polyol et/ou dispersion polymère/polyol (ou "polymère-polyol") dans laquelle de fines particules de polymère obtenues par polymérisation d'un composé doté d'une liaison insaturée se trouvent dispersées dans un polyol,
lequel polyol comprend au moins :
A) un polyol d'origine végétale, produit à partir d'une matière brute obtenue à partir de végétaux,
B1) et un polyéther-polyol présentant un degré global d'insaturation inférieur ou égal à 0,050 méq/g et un indice d'hydroxyle valant de 10 à 40 mgKOH/g,
dans lequel ou laquelle la quantité totale du polyol d'origine végétale (A) et de polymère-polyol obtenu à partir du polyol (A) représente de 15 à 95 % de la masse totale (100 %) des composants polyols,
dans lequel ou laquelle la quantité totale du polyéther-polyol (B1) et de polymère-polyol (PB) obtenu à partir du polyéther-polyol (B1) représente de 5 à 85 % de la masse totale (100 %) des composants polyols,
et dans lequel ou laquelle le polyol d'origine végétale (A) consiste en un ou plusieurs polyol(s) d'origine végétale, choisi(s) parmi les suivants :
- un polyester-polyol d'origine végétale (A5), comportant au moins une structure résultant de la condensation de 6 à 30 moles d'un acide hydroxy-carboxylique avec 1 mole d'un polyol doté de 2 à 6 groupes hydroxyle par molécule, étant entendu que cet acide hydroxy-carboxylique renferme des acides gras d'huile de ricin comprenant, en tant que composant principal, de l'acide ricinoléique issu d'huile de ricin et/ou des acides gras d'huile de ricin hydrogénée comprenant, en tant que composant principal, de l'acide 12-hydroxy-stéarique obtenu par saturation des doubles liaisons carbone-carbone présentes dans lesdits acides gras d'huile de ricin,
- un polyol (A6) obtenu par addition, en sus, d'oxyde d'éthylène et/ou d'oxyde de propylène audit polyester-polyol d'origine végétale (A5),
- un polyol (A7) obtenu par addition, en sus, d'une lactone audit polyester-polyol d'origine végétale (A5),
- et un polyol (A8) obtenu par addition, en sus, d'un acide hydroxy-carboxylique doté d'un groupe hydroxyle de fonction alcool primaire audit polyester-polyol d'origine végétale (A5).

4. Mousse de polyuréthane qu'on peut obtenir en transformant en mousse une composition pour mousse de polyuréthane conforme à la revendication 1 ou 2.

5. Procédé de production de mousse de polyuréthane, qui comporte le fait de transformer en mousse une composition pour mousse de polyuréthane conforme à la revendication 1 ou 2.

6. Coussin pour siège de véhicule, comprenant une mousse de polyuréthane conforme à la revendication 4.

7. Coussin pour siège de véhicule, conforme à la revendication 6, qui est une assise de siège.

8. Coussin pour siège de véhicule, conforme à la revendication 6, qui est un dossier de siège.

9. Utilisation d'une mousse de polyuréthane conforme à la revendication 4, en tant que coussin pour siège de véhicule.

10. Utilisation conforme à la revendication 9, dans laquelle le coussin pour siège est une assise de siège ou un dossier de siège.
